Europäisches Patentamt

European Patent Office

Office européen des brevets

(11) Publication number: 0 232 620
A2

# EUROPEAN PATENT APPLICATION

(21) Application number: 86310121.8

(22) Date of filing: 23.12.86

(51) Int. Cl.4: G11B 23/04 , G11B 25/10 , G11B 15/08

(30) Priority: 28.12.85 JP 199946/85

(43) Date of publication of application:
19.08.87 Bulletin 87/34

(84) Designated Contracting States:
DE FR GB IT

(71) Applicant: SONY CORPORATION
7-35 Kitashinagawa 6-Chome Shinagawa-ku
Tokyo 141(JP)
Applicant: Hewlett-Packard Company
Mail Stop 20 B-O 3000 Hanover Street
Palo Alto California 94304(US)

(72) Inventor: Koizumi, Osamu c/o Patents
Division
Sony Corporation 6-7-35 Kitishinagawa
Shinagawa-ku Tokyo 141(JP)
Inventor: Henze, Richard H. Hewlett-Packard
Company
3000 Hanover Street
Palo Alto California 94304(US)
Inventor: Clifford, George Hewlett-Packard
Company
3000 Hanover Street
Palo Alto California 94304(US)
Inventor: Spenner, Bruce F. Hewlett-Packard
Company
3000 Hanover Street
Palo Alto California 94304(US)

(74) Representative: Thomas, Christopher Hugo et
al
D Young & Co 10 Staple Inn
London WC1V 7RD(GB)

(54) Magnetic tape cartridges.

(57) A disc-drive-compatible magnetic tape cartridge (10) includes a magnetic tape (12) provided with tape end markings (12a) at each end, and a cartridge casing (14, 16) housing the magnetic tape (12). The cartridge (10) defines therein a tape run path (62) so as to run the magnetic tape on an identical plane to that on which a magnetic disc would be rotationally driven, and registers the tape - (12) with respect to a location where data can be written on the tape (12) or is read from the tape (12) by means of a read/write head of a disc drive. The cartridge casing (14, 16) has a section (72, 74) adjacent to the tape run path (62), to allow optical detection of the tape end markings (12a).

FIG.1

## MAGNETIC TAPE CARTRIDGES

This invention relates to magnetic tape cartridges.

Various magnetic discs and disc drives have been proposed for storing data. For example, US patent US-A-4 445 155 discloses a typical microfloppy disc, that is a 3.5 inch (approximately 89 mm) floppy disc, and a disc drive therefor. The floppy disc is in the form of a floppy disc cartridge (or cassette) generally comprising a flexible magnetic disc and a cartridge (or cassette) casing. The flexible disc includes a centre core disc designed to be chucked on a turntable of the disc drive which rotates the flexible disc through the centre core disc.

Such floppy discs permit fast access. However, floppy discs have a limited data storage capacity, and archival or back-up storage of data stored on a hard disc generally requires twenty to eighty floppy discs. This involves substantial expense.

On the other hand, magnetic tapes have a much larger storage capacity than floppy discs, but are inconvenient when fast access to data is required. In other words, when fast access is not required, magnetic tapes are useful because of their large storage capacity. Therefore, as back-up storage for hard discs, magnetic tapes should be regarded as a useful and convenient medium to use.

In order to record and reproduce data on or from magnetic tapes, a so-called 'data recorder' magnetic tape recording and reproducing apparatus is used, whereas recording and reproduction of data on and from magnetic discs is performed using a disc drive. Consequently, to use magnetic tapes as back-up storage media, a data recorder and a disc drive are required, which is an additional expense.

So as to allow the use of magnetic tape for inexpensive back-up storage of data on hard discs or floppy discs, it would be beneficial to provide a magnetic tape cartridge compatible with floppy disc drives, so that it can be driven by the same drive unit. For this purpose, there has been proposed a disc-drive-compatible magnetic tape cartridge in Japanese patent first publication (Tokkai) 61/214188, published on 24 September 1986. This proposed magnetic tape cartridge can utilize the read/write head or heads of a disc drive to write data on and/or read data from a magnetic tape. The magnetic tape cartridge contains the tape, a mechanism to register the tape with respect to a location at which data is written on the tape or is read from the tape by the read/write head or heads of the disc drive, means for storing the tape, and a mechanism to feed the tape past the read/write head or heads. The magnetic tape cartridge has a portion having an external shape and size which allow that portion to be inserted into the disc drive to enable the tape to be placed in the vicinity of the read/write head or heads.

It would further be convenient for such a disc-drive-compatible magnetic tape cartridge to provide an 'auto-stop' function for automatically stopping the tape drive at the tape-end and/or and 'auto-reverse' function for automatically switching the tape drive direction at the end of the tape.

According to the present invention there is provided a magnetic tape cartridge;
characterised in that:
it is suitable for transferring data between a magnetic tape and a disc drive head in a disc drive, said magnetic tape cartridge comprising:
a magnetic tape suitable for transferring data between said magnetic tape and said disc drive head, said magnetic tape having optically detectable portions at the beginning and the end of said magnetic tape;
means for supplying and storing said magnetic tape;
a casing for containing said magnetic tape and said tape supplying and storing means therein;
means in said casing for defining a tape run path through which said magnetic tape is passed; and
means forming a transparent portion on said casing, said transparent portion being located adjacent to said tape run path, whereby said optically detectable portions are detectable by an optical sensor from outside said cartridge.

Thus an embodiment of disc-drive-compatible magnetic tape cartridge according to the present invention may include a magnetic tape provided with tape end markings at both longitudinal ends, and a cartridge casing housing the tape therein. The cartridge defines therein a tape run path so as to run the tape on the identical plane on which a magnetic disc would be rotatingly driven, and to register the tape with respect to a location where data is written on the tape or is read from the tape by means of a read/write head of a disc drive. The cartridge casing has a section located adjacent to part of the tape run path, which allows optical detection of the tape end markings.

The tape end markings may comprise known leader sections of the magnetic tape.

The transparent portion may comprise a hole which is formed in the casing. Alternatively, the transparent portion may comprise a transparent shell which forms a part of the casing. The tape supplying and storing means may comprise a pair of magnetic tape reels, and a pair of transparent portions may be respectively formed on the tape run path adjacent to the pair of reels.

In a preferred embodiment, a transparent portion is located closer to a first edge of the tape and another transparent portion is located closer to a second edge thereof.

According to the present invention there is also provided a magnetic tape cartridge;
characterised in that:
it is suitable for transferring data between a magnetic tape and a disc drive head in a disc drive, said magnetic tape cartridge comprising:
a magnetic tape suitable for transferring data between said magnetic tape and said disc drive head, said magnetic tape having optically detectable portions at the beginning and the end of said magnetic tape;
means for supplying and storing said magnetic tape, which includes a pair of tape reels about which said magnetic tape is wound, said pair of tape reels being arranged for rotation about a common rotational axis;
a casing for containing said magnetic tape and said tape supplying and storing means therein;
means in said casing for defining a tape run path through which said magnetic tape is passed over said disc drive head; and
means forming a transparent window portion in said casing, said transparent window portion being location at a position opposing said tape run path, and covered by a transparent member, whereby said optically detectable portions are detectable by an optical sensor from outside said cartridge.

In a preferred embodiment, the casing is in a substantially thin, box-shaped configuration having relatively large side surfaces and relatively narrow edge surfaces, and the tape run path defining means defines the tape run path to place a recording surface of the tape parallel to said wider side surfaces.

The invention will now be described by way of example with reference to the accompanying drawings, throughout which like parts are referred to by like references, and in which:

Figure 1 is a perspective view of an embodiment of disc-drive-compatible magnetic tape cartridge according to the present invention;

Figure 2 is a perspective view of the embodiment of Figure 1, as viewed from the bottom;

Figure 3 is a plan view of the embodiment of Figure 1, in which a portion of an upper half of the cartridge is removed to show a tape drive mechanism;

Figure 4 is an enlarged longitudinal section of a portion of the embodiment of Figure 1 with the tape drive mechanism, which section is taken along line IV-IV of Figure 3; and

Figure 5 is a perspective view of a modified embodiment of disc-drive-compatible magnetic tape cartridge according to the present invention, with a shutter removed.

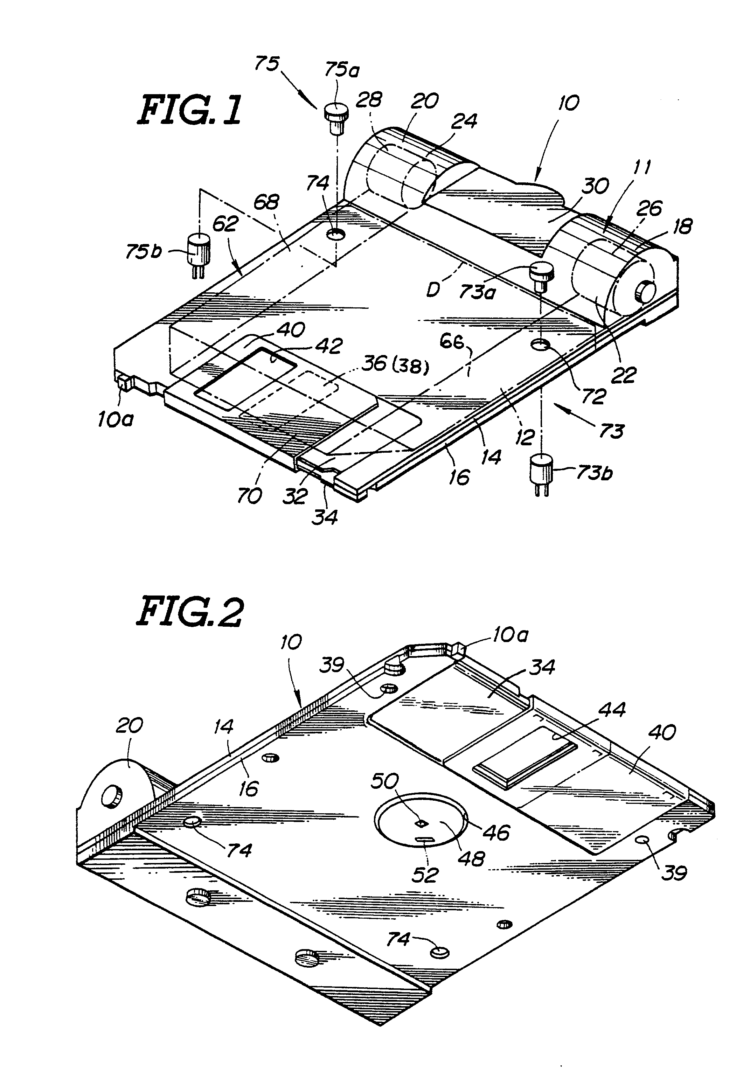

Referring now to Figures 1 to 3, the embodiment of magnetic tape cartridge 10 is formed in a thin, rectangular-box-shaped configuration, which is compatible with a disc drive for floppy discs of corresponding size, such as 3.5 inch - (approximately 89 mm) microfloppy discs of the tape disclosed in US-A-4 445 155. However, it should be appreciated that the present invention is applicable to magnetic tape cartridge compatible with disc drives of any size.

A magnetic tape 12 is housed within the cartridge 10. The cartridge 10 is made up of an upper half 14 and a lower half 16. The halves 14 and 16 are of equal size in plan view and are fixed to each other to form the cartridge 10. The cartridge 10 is of substantially the same size and shape as the microfloppy disc cartridge disclosed in US-A-4 445 155, but is longer than that disc cartridge. The length of the normal disc cartridge is illustrated by the line D in Figure 1. Thus, the cartridge 10 has an extra section 11 which accommodates the tape reels, the tape drive mechanism and so forth. When the cartridge 10 is loaded into the disc drive for which it is designed, the extra section 11 will remain outside of the disc drive, protruding from the opening of the disc drive.

The cartridge 10 is further formed with a projection 10a projecting from the front end of the cartridge 10. The projection 10a serves as an indicator for making the disc drive recognize that the cartridge 10 is used.

However, it would be possible to make the cartridge 10 match the floppy disc cartridge not only in width and thickness, but also in length, if necessary.

The upper half 14 has semi-cylindrical hollow extensions 18 and 20 near its rear corners and along its rear edge ('rear' referring to the direction of insertion into the disc drive). The extensions 18 and 20 extend upwards from the upper surface of the upper half 14 and thus define tape reel recesses 22 and 24 receiving a supply reel 26 and a take-up reel 28. A space 30 for a power train, which will be described in detail later, remains between the tape reel recesses 22 and 24.

The halves 14 and 16 have recesses 32 and 34 exposed to the outside on their upper and lower surfaces respectively. Longitudinally (with respect to the direction of insertion) elongated tape access apertures 36 and 38 are formed in the halves 14 and 16 within the recesses 32 and 34. The tape access apertures 36 and 38 are aligned with each other to allow a disc drive head (not shown) of a disc drive access to the tape 12. The disc drive can be the same as or slightly modified from that disclosed in US-A-4 445 155.

The lower half 16 also has positioning holes 39 for positioning the cartridge 10 within the disc drive. The positioning holes 39 receive positioning pins (not shown) built into the disc drive.

A sliding shutter 40, shown closed in Figure 1 and open in Figure 2, slidingly engages the recesses 32 and 34. Upper and lower surfaces of the shutter 40 lie flush with the upper and lower surfaces of the cartridge 10 as assembled. The shutter 40 has longitudinally elongated apertures 42 and 44 of the same size and configuration as the tape access apertures 36 and 38 of the cartridge 10. The shutter 40 is movable between the closed position, in which the apertures 42 and 44 are offset from the tape access apertures 36 and 38 and the tape 12 is hidden, and the open position, in which the apertures 42 and 44 are aligned with the tape access apertures 36 and 38 to allow the disc drive head access to the tape 12. The sliding shutter 40 is normally biased by a spring (not shown) towards the closed position, and is actuated to the open position when the cartridge 10 is inserted into the disc drive.

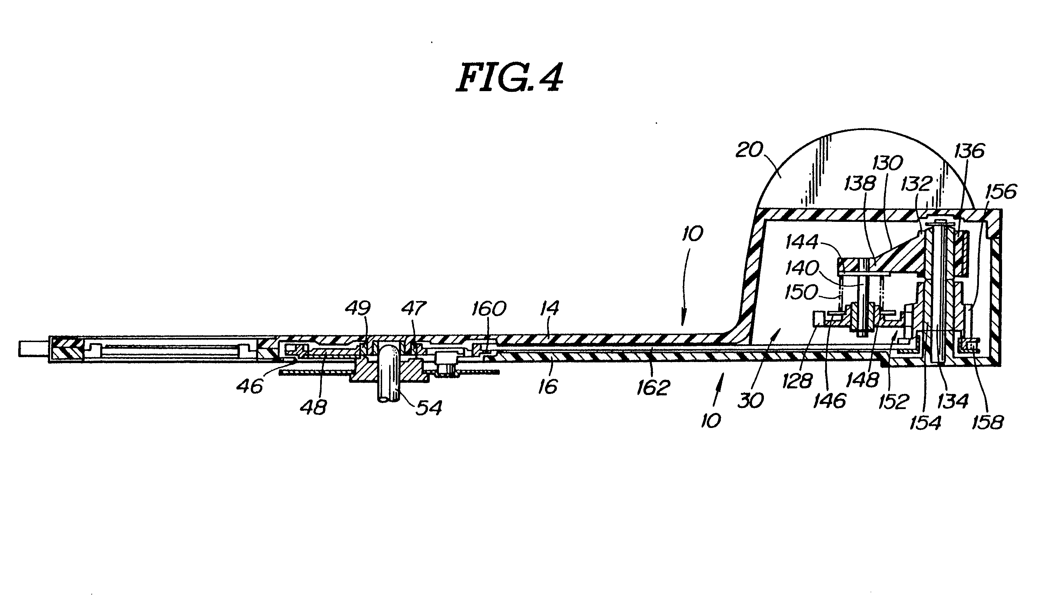

The lower half 16 also has a central aperture 46. A centre core disc 48 is rotatably mounted on a boss 47 extending from the lower surface of the upper half 14 through a bearing 49, such as an oilless metal bearing, as shown in Figure 4. The centre core disc 48 opposes the central aperture 46 in the lower half 16 and is thus exposed through the central aperture 46 of the lower half 16. The centre core disc 48 has a centre positioning aperture 50 and a driving and positioning aperture 52. The driving and positioning aperture 52 is offset by a given distance from the centre positioning aperture. The centre positioning aperture 50 is designed to engage a disc drive motor spindle 54. On the other hand, the driving and positioning aperture 52 is designed to engage a driving pin mounted on a turntable (not shown) which is driven to rotate by the motor spindle 54. Therefore, the centre core disc 48 is driven to rotate by the driving force transmitted through the turntable of the disc drive.

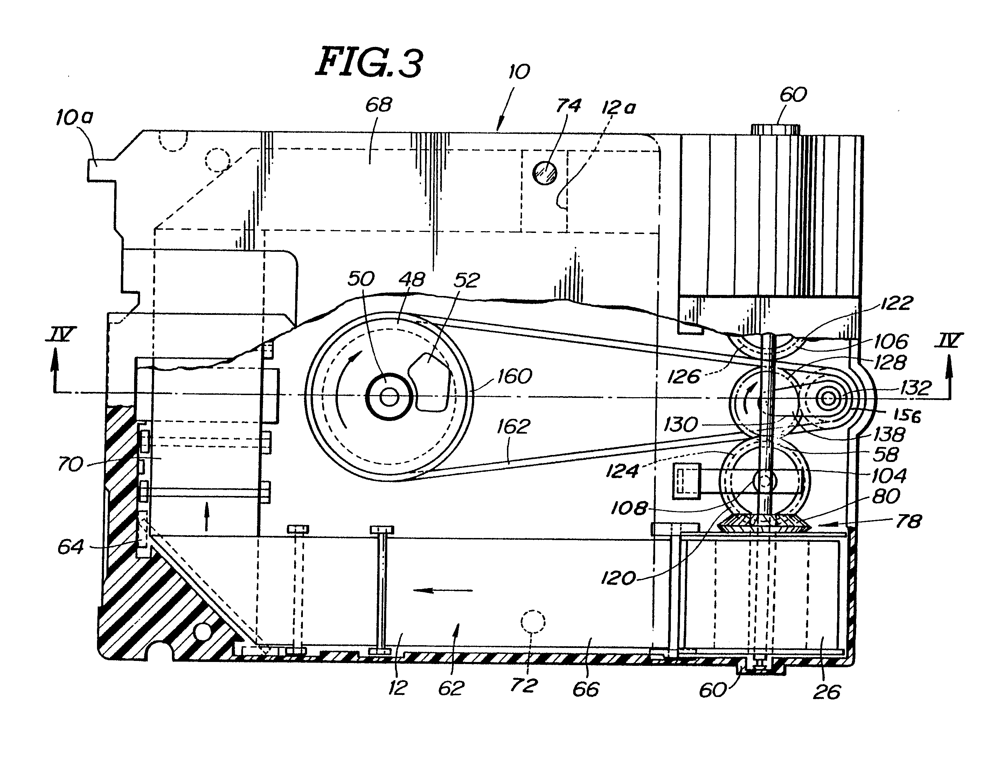

The supply and take-up reels 26 and 28 are rotatably supported by a support shaft 58, the ends of which are fixed to boss sections 60 formed on the side walls of the extensions 18 and 20 as shown in Figure 3. Therefore, the reels 26 and 28 are mounted within the tape reel recesses 22 and 24 with their axes lying transversely. A tape run path 62 is defined within the thin space defined in the front portion of the cartridge 10 along which the tape 12 passes between the tape access apertures 36 and 38. Tape guides or bars 64 define the tape run path 62. As will be seen from Figures 1 and 3, the tape run path 62 has a first section 66 near the supply reel 26 and extending longitudinally along one edge of the cartridge 10, a second section 68 near the take-up reel 28 and extending longitudinally along the other edge of the cartridge 10, and a third section 70 extending laterally across the front edge and between the tape access apertures 36 and 38. At the junctures of the first section 66 and third section 70, and of the second section 68 and third section 70, the tape guides 64 are provided to deflect the tape 12.

In this description, the word 'longitudinal' used in connection with the tape path, means the axis of movement along the first and second sections 66 and 68 of the tape run path 62, and the word 'lateral' used in connection with the tape path, means the axis of movement along the third section 70 of the tape run path 62.

In order to indicate the ends of the tape 12, transparent or semi – transparent portions such as leader tape sections 12a are formed adjacent to the tape ends. Such a leader tape section 12a can have a known construction and is optically detectable by means of optical tape end detectors 73 and 75 which are provided in the disc drive for automatically stopping tape drive or for automatically reversing the tape driving direction. So as to enable the tape end detectors 73 and 75 to detect the leader tape sections 12a, the upper and lower halves 14 and 16 have circular transparent sections 72 and 74, for example, holes or portions of transparent resin material, opposing the first and second sections 66 and 68 of the tape run path 62. As shown in Figure 1, the tape end detectors 73 and 75 comprise respective light emitting elements 73a and 75a and light sensing elements 73b and 75b. The light emitting elements 73a and 75a oppose the light sensing elements 73b and 75b across the tape run path 62 and across the transparent sections 72 and 74 of the cartridge 10. In a preferred embodiment, the transparent sections 72 and 74 are located at positions corresponding to the first and second sections 66 and 68 of the tape run path 62. Through the transparent sections 72 and 74, the tape run path 62 can be monitored to detect the presence or absence of the leader tape sections 12a. Thus, the light beam emitted from the light emitting elements 73a and 75a pass through the transparent or semi-transparent leader tape sections 12a when they oppose the transparent sections 72 and 74. Then, the light sensing elements 73b and 75b detect the light beam from the respective light emitting elements 73a and 75a to generate detector signals. Such detector signals serve as tape end indicating signals for controlling automatic tape stop operation or automatic reversing of the tape driving direction.

In order selectively to drive the supply reel 26 and the take-up reel 28 for recording and/or reproduction in forward and reverse directions, the cartridge 10 is provided with a specially designed tape drive mechanism. In general, the take-up reel 28 is driven to extract the tape 12 from the supply reel 26 through the tape run path 62 during recording and reproduction. This tape direction will be hereafter referred to as 'forward'. On the other hand, the supply reel 26 must be driven to extract the tape 12 from the take-up reel 28 during rewinding. The supply reel 26 drives the tape 12 through the tape run path 62 in the direction opposite to the forward direction. This direction will hereafter be referred to as 'reverse'.

The tape drive mechanism includes a pair of bevel gear blocks 78 (only one is seen) as shown in Figure 3. The bevel gear blocks 78 are generally cylindrical and have bevel gears 80 respectively at one end thereof. The bevel gear blocks 78 are coaxially mounted on the mutually opposing axial ends of the supply reel 26 and the take-up reel 28. The bevel gear blocks 78 are rotatable with the supply reel 26 and the take-up reel 28.

A pair of intermediate gear blocks 104 and 106 are rotatably supported by gear shafts 108 extending vertically from the floor of the cartridge 10. The gear shafts 108 are arranged in lateral alignment at a given distance from each other. The distance between the gear shafts 108 is slightly greater than or approximately equal to twice the outer diameter of the intermediate gear blocks 104 and 106. The intermediate gear blocks 104 and 106 have bevel gears 120 and 122 respectively at their upper ends. Respective bevel gears 120 and 122 constantly engage the corresponding bevel gears 80.

The intermediate gear blocks 104 and 106 also have plane gears 124 and 126 below the bevel gears 120 and 122. The plane gears 124 and 126 lie in the same horizontal plane at a given distance from each other. Since the gear shafts 108 are separated by a distance slightly greater than or approximately equal to the outer diameter of the intermediate gear blocks 104 and 106, the distance between the plane gears 124 and 126 is slightly greater than the outer diameter thereof.

As shown in Figure 4, a two-way coupling gear 128 is disposed between the plane gears 124 and 126. The two-way coupling gear 128 is mounted on a pivotal base 130. The pivotal base 130 has a cylindrical base section 132 pivotably mounted at the top of a pivot shaft 134 extending vertically from the floor of the cartridge 10. A sleeve bearing 136 is interposed between the inner periphery of the cylindrical base section 132 and the outer periphery of the pivot shaft 134 to allow pivotal movement of the pivotal base 130. The pivotal base 130 also has a pivoting arm 138. A gear shaft 140 extends downward from the pivoting arm 138. Adjacent to its lower end, the gear shaft 140 carries the two-way coupling gear 128. The two-way coupling gear 128 is rotatable about the gear shaft 140. A sleeve bearing 142 is disposed between the contacting faces of the gear shaft 140 and the two-way coupling gear 128.

An annular slip plate 144 loosely engages the gear shaft 140 for the two-way coupling gear 128. Also, an annular-disc-shaped spring seat 146 engages the stepped outer periphery 148 of the two-way coupling gear 128. A compression coil spring 150 is disposed between the slip plate 144 and the spring seat 146 to exert a biasing spring force on the slip plate 144 for frictional engagement with the lower surface of the pivoting arm 138. At the same time, the spring force of the coil spring 150 is exerted on the two-way coupling gear 128 through the spring seat 146. The slip plate 144 and the coil spring 150 form a clutch mechanism which causes the pivotal base 130 to pivot so as to bring the two-way coupling gear 128 into engagement with one of the plane gears 124 and 126 of the intermediate gear blocks 104 and 106, depending on the direction of rotation of the two-way gear 128.

A drive gear block 152 is mounted at the lower end of the pivot shaft 134 through a sleeve bearing 154. The drive gear block 152 has a drive gear 156 constantly engaging the two-way coupling gear 128. The drive gear block 152 also has a pulley 158 integrally formed with the drive gear 156. The pulley 158 is connected to a pulley 160 integral with a centre core disc 202 of a centre core assembly 200, which will be described later, by means of a driving belt 162.

It should be appreciated that the gear ratio of the aforementioned tape drive mechanism is selected so as to drive the tape 12 at a speed equal to the rotational speed of a floppy disc on the same disc drive. Specifically, the tape speed at the third section 70 of the tape run path 62 has to be equal to the rotational speed of a floppy disc, so that the disc drive can use the same recording and reproduction operations without adjustment.

For a conventional 3.5 inch (approximately 89 mm) floppy disc, rotation is at about 600 r.p.m. so as to be free of peak-shift errors and data drop-out. Therefore, if it is assumed that the linear velocity of the outermost track is V1 and that of the innermost track is V2, it is favourable that the feed rate V of the tape 12 be $V2 < V < V1$.

In order to drive the magnetic tape 12 forward - (from the supply reel 26 onto the take-up reel 28), the turntable is driven clockwise in Figure 3. With clockwise rotation of the turntable, the centre core disc 48 is driven clockwise. The clockwise rotational force is transmitted from the pulley 160 of the centre core disc 48 to the pulley 158 of the drive gear block 152 through the drive belt 162. Therefore, the drive gear 156 is driven to rotate clockwise in Figure 3.

As long as the two-way coupling gear 128 remains free of the plane gears 124 and 126 of the intermediate gear blocks 104 and 106, the slip plate 144 maintains frictional engagement with the mating surface of the pivoting arm 138 of the pivotal base 130, due to the spring force of the coil spring 150. Therefore, the rotational force transmitted by the drive gear 156 of the drive gear block 52 to the two-way coupling gear 128 serves to drive the pivotal base 130 to pivot clockwise.

Once the two-way coupling gear 128 comes into engagement with the plane gear 126 of the intermediate gear block 106, pivotal movement of the pivotal base 130 is restricted. Then the rotational driving force transmitted by the drive gear 156 to the two-way coupling gear 128 overcomes the spring force of the coil spring 150 and so causes slip between the mating surfaces of the slip plate 144 and the pivoting arm 138. As a result, the two-way coupling gear 128 starts to rotate counterclockwise, thereby driving the plane gear 126 of the intermediate gear clockwise. The bevel gear 122 of the intermediate gear block 106 thus rotates clockwise, which causes the bevel gear 76 to drive the take-up reel 28 to wind in the tape 12.

When the cartridge 10 is unloaded and released from the disc drive, or otherwise, the turntable 302 of the disc drive is forcibly stopped, coil springs (not shown) serve to restrict rotation of the intermediate gear blocks 104 and 106. Since the bevel gears 120 and 122 of the intermediate gear blocks 104 and 106 are constantly engaged with the bevel gears 80 and 82, rotation of the supply reel 26 and the take-up reel 28 is also restricted by means of these coil springs. Therefore, even when release of the cartridge 10 from the turntable 302 of the disc drive is stopped abruptly, slackening of the tape 12 due to over-running of the tape reel 26 or 28 is prevented.

On the other hand, in order to switch from forward to reverse, the direction of rotation of the turntable 302 is switched from clockwise to counter-clockwise as viewed in Figure 3. With counter-clockwise rotation of the turntable 302, the centre core disc 202 is driven counter-clockwise. The counter-clockwise rotational force is transmitted from the pulley 160 of the centre core disc 202 to the pulley 158 of the drive gear block 152 through the driving belt 162. Therefore, the drive gear 156 is driven counter-clockwise in Figure 3.

As long as the two-way coupling gear 128 remains free of the plane gear 124 of the intermediate gear block 104, the slip plate 144 maintains frictional engagement with the mating surface of the pivoting arm 138 of the pivotal base 130 due to the spring force of the coil spring 150 as the two-way coupling gear 128 becomes free from the clockwise rotational force of the drive gear 156. Therefore, the counter-clockwise rotational force transmitted by the drive gear 156 of the drive gear block 152 to the two-way coupling gear 128 serves as a driving force for the pivotal base 130, causing the pivotal base 130 to pivot counter-clockwise in Figure 3.

Once the two-way coupling gear 128 comes into engagement with the plane gear 124 of the intermediate gear block 104, pivotal movement of the pivotal base 130 is restricted. Then, the rotational driving force transmitted by the drive gear 156 to the two-way coupling gear 128 overcomes the spring force of the coil spring 150, causing slip between the mating surfaces of the slip plate 144 and the pivoting arm 138. As a result, the two-way coupling gear 128 starts to rotate clockwise, thus driving the plane gear 124 of the intermediate gear block 104 counter-clockwise. The bevel gear 120 of the intermediate gear block 104 is thus rotated clockwise, causing the bevel gear 74 to drive the supply reel 26 to rewind the tape 12.

In the embodiment, magnetic tape 12 three-quarters inch (approximately 19 mm) wide is employed in the cartridge 10. In this case, eighty recording tracks can be formed, which corresponds to the number that can be formed on a 3.5 inch - (approximately 89 mm) floppy disc. Each track formed on the tape 12 extends longitudinally along the tape 12. It will be appreciated that the length of each track depends solely on the length of the tape 12, and so can be substantially longer than the length of the recording tracks formed on a 3.5 inch (approximately 89 mm) floppy disc. In general, the capacity of each track on the tape 12 will be several tens of times greater than that of a track on a floppy disc. If the tape 12 is 12 m long, the capacity of the cartridge 10 will be approximately 20 megabytes.

In this operation, one of the leader tape sections 12a of the tape 12 is detected by one of the tape end detectors 73 and 75. The tape end detector 73 or 75 detecting the leader tape section 12a produces a detector signal for stopping drive of the tape 12 or reversing the tape driving direction.

One of the transparent sections 72 or 74 may be closer to one edge of the tape 12, while the other transparent section 74 or 72 is closer to the other edge of the tape 12.

Since a preferred embodiment of the magnetic tape cartridge has the transparent sections 72 and 74 formed of a transparent resin material, entry of dust into the cartridge can be prevented. This eliminates or at least significantly reduces the possibility of read/write error resulting from damage to the tape 12. This is very important when utilizing such a cartridge 10 as back-up storage for a computer.

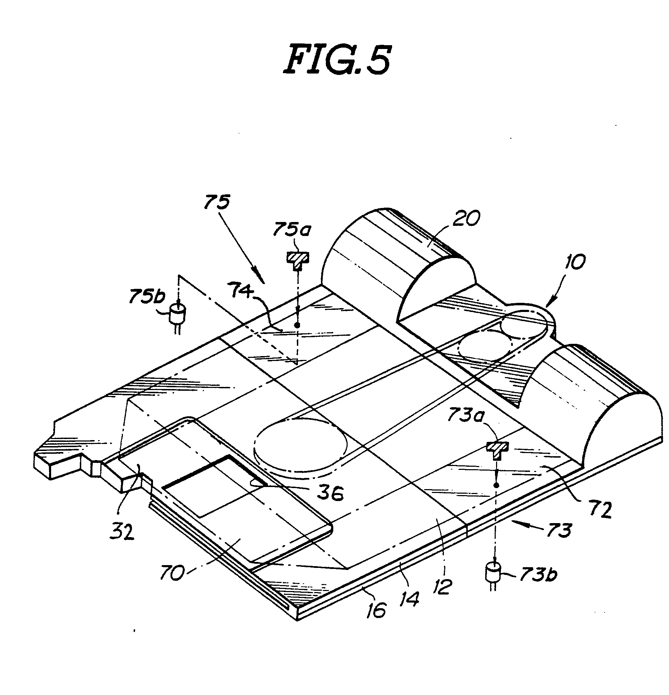

The transparent sections 72 and 74 are not necessarily circular, but can be of any desired configurations. For example, the transparent sections 72 and 74 can be relatively wide and rectangular-shaped as shown in Figure 5. Moreover, it would also be possible to form the whole of the upper and/or lower halves 14 and 16 of the cartridge 10 of transparent resin material.

As will be appreciated herefrom, in the embodiment, tracking of the disc drive head is easy. As a result, high-density recording becomes possible, and the magnetic tape can be tracked by means of tracking mechanisms as usually employed in disc drives.

Such an embodiment an provide a very large data storage capacity, and is suitable for use as back-up storage for hard-discs or floppy discs. Furthermore, it can be utilized in a filing system which requires high-capacity memory media. In addition, the embodiment can have functions such as automatically stopping the tape drive at the tape ends and/or of automatically reversing the tape driving direction.

The present invention is applicable to any type of magnetic tape cartridge compatible with disc drives.

## Claims

1. A magnetic tape cartridge (10);
characterised in that:
it is suitable for transferring data between a magnetic tape (12) and a disc drive head in a disc drive, said magnetic tape cartridge (10) comprising:
a magnetic tape (12) suitable for transferring data between said magnetic tape (12) and said disc drive head, said magnetic tape (12) having optically detectable portions (12a) at the beginning and the end of said magnetic tape (12);
means (26, 28) for supplying and storing said magnetic tape (12);
a casing (14, 16) for containing said magnetic tape (12) and said tape supplying and storing means (26, 28) therein;

means (64) in said casing for defining a tape run path (62) through which said magnetic tape (12) is passed; and
means (72, 74) forming a transparent portion (72, 74) on said casing (14, 16), said transparent portion (72, 74) being located adjacent to said tape run path (62), whereby said optically detectable portions (12a) are detectable by an optical sensor (73, 75) from outside said cartridge (10).

2. A magnetic tape cartridge (10) according to claim 1 wherein said transparent portion (72, 74) comprises a hole in said casing (14, 16).

3. A magnetic tape cartridge (10) according to claim 1 wherein said transparent portion (72, 74) comprises a transparent material.

4. A magnetic tape cartridge (10) according to claim 2 or claim 3 wherein said magnetic tape supplying and storing means (26, 28) comprises a pair of magnetic tape reels (26, 28), and in which a pair of said transparent portions (72, 74) are respectively formed on said tape run path (62) adjacent to said pair of magnetic tape reels (26, 28).

5. A magnetic tape cartridge (10) according to claim 4 wherein one of said transparent portions - (72, 74) is located closer to a first edge of said magnetic tape (12) and another of said transparent portions (74, 72) is located closer to a second edge thereof.

6. A magnetic tape cartridge (10);
characterised in that:
it is suitable for transferring data between a magnetic tape (12) and a disc drive head in a disc drive, said magnetic tape cartridge (10) comprising:
a magnetic tape (12) suitable for transferring data between said magnetic tape (12) and said disc drive head, said magnetic tape (12) having optically detectable portions (12a) at the beginning and the end of said magnetic tape (12);
means (26, 28) for supplying and storing said magnetic tape (12), which includes a pair of tape reels - (26, 28) about which said magnetic tape (12) is wound, said pair of tape reels (26, 28) being arranged for rotation about a common rotational axis;
a casing (14, 16) for containing said magnetic tape (12) and said tape supplying and storing means - (26, 28) therein;
means (64) in said casing for defining a tape run path (62) through which said magnetic tape (12) is passed over said disc drive head; and
means (72, 74) forming a transparent window portion (72, 74) in said casing (14, 16), said transparent window portion (72, 74) being location at a position opposing said tape run path (62), and covered by a transparent member, whereby said optically detectable portions (12a) are detectable by an optical sensor (73, 75) from outside said cartridge (10).

7. A magnetic tape cartridge (10) according to claim 6 wherein said transparent member (72, 74) forms at least one of a pair of halves (14, 16) of said casing (14, 16).

8. A magnetic tape cartridge (10) according to claim 6 wherein said casing (14, 16) is formed in substantially thin, box-shaped configuration having relatively large side surfaces and relatively narrow edge surfaces, and said tape run path defining means (64) defines said tape run path (62) to place the recording surface of said magnetic tape (12) parallel to said side surfaces.

0 232 620

FIG.1

FIG.2

FIG.3

0 232 620

FIG.4

0 232 620

# FIG.5